(19) **Europäisches Patentamt / European Patent Office / Office européen des brevets**

(11) **EP 2 927 265 A1**

(12) **EUROPEAN PATENT APPLICATION**
published in accordance with Art. 153(4) EPC

(43) Date of publication:
07.10.2015 Bulletin 2015/41

(21) Application number: 13858055.0

(22) Date of filing: 28.11.2013

(51) Int Cl.:
*C08J 3/12* (2006.01)    *C08K 7/06* (2006.01)
*C08L 23/10* (2006.01)    *C08L 23/26* (2006.01)

(86) International application number:
**PCT/JP2013/082061**

(87) International publication number:
**WO 2014/084314 (05.06.2014 Gazette 2014/23)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **30.11.2012 JP 2012263409**

(71) Applicant: **Mitsubishi Rayon Co., Ltd.**
**Tokyo 100-8253 (JP)**

(72) Inventors:
• **OKUNAKA Osamu**
**Toyohashi-shi**
**Aichi 440-8601 (JP)**
• **ITOU Kazuaki**
**Toyohashi-shi**
**Aichi 440-8601 (JP)**

(74) Representative: **TBK**
**Bavariaring 4-6**
**80336 München (DE)**

(54) **PELLET MIXTURE, CARBON FIBER-REINFORCED POLYPROPYLENE RESIN COMPOSITION, MOLDED BODY, AND METHOD FOR PRODUCING PELLET MIXTURE**

(57) Provided are: a mixture of pellets of carbon fiber-reinforced polypropylene resins, which exhibits excellent strength, in particular, excellent flexural strength; a composition; a molded body; and a method for producing the mixture of pellets. A pellet mixture which contains: pellets (X), each of which contains carbon fibers (C) and a polypropylene resin (A) that is not substantially modified with an acid; and pellets (Y), each of which contains an acid-modified polypropylene resin (B).

**Description**

TECHNICAL FIELD

The present invention relates to a pellet mixture of a carbon fiber reinforced polypropylene resin showing superior strength, a composition and molded article of the carbon fiber reinforced polypropylene resin and a method of manufacturing the above pellet mixture. The present application claims priority based on Japanese Patent Application No. 2012-263409 filed on November 30, 2012 in Japan, the contents of which are incorporated herein by reference.

BACKGROUND ART

Polypropylene resins, which are easily moldable and have an excellent balance between lightweightness and mechanical properties, are widely used for commodity materials and various industrial components such as interior and exterior parts of automobiles.

In polypropylene resins for industrial components, inorganic fillers such as talc, mica or glass fiber are successfully blended in order to increase mechanical strength such as rigidity and thermal resistance. Talc is the most common inorganic filler and widely used. However, in order to obtain a required mechanical strength by blending talc, a large blending amount is required. Since a polypropylene resin composition in which talc is blended shows a large specific gravity, the reinforcement effect thereof is not sufficient.

For this reason, a method of blending fibrous fillers such as glass fibers, whiskers or carbon fibers having a high aspect ratio is known for applications in which higher rigidity and strength are required. Among these, carbon fibers are an excellent reinforcing material in that more advanced reinforcing effects (i.e., the balance between rigidly and strength and lightweightness) can be obtained as compared with glass fibers and whiskers.

However, in recent years, further advanced mechanical strength has been often required, and pultrusion molding has gathered attention as a method of manufacturing a thermoplastic resin composition reinforced with long glass fibers without causing fiber breakage. Patent Document 1 describes a method comprising drawing continuous glass fibers through a cross head die while performing impregnation with a molten resin.

In the case of carbon fibers and a polypropylene resin, the adhesiveness of the carbon fibers to the resin is insufficient due to low affinity between them. Further, Patent Document 2 describes a method comprising using pellets of a resin reinforced with long carbon fibers which are obtained by impregnating carbon fibers with a maleic acid modified polypropylene resin and/or a maleic anhydride modified polypropylene resin, the carbon fibers being surface-treated with an epoxy based sizing agent. According to this method, the strength of a molded article is high due to high interface strength, while the impregnation of carbon fiber may be difficult. Therefore, strength may be low depending on the manufacturing method.

CITATION LIST

PATENT DOCUMENT

Patent Document 1: Japanese Unexamined Patent Application, Publication No. H03-121146
Patent Document 2: Japanese Unexamined Patent Application, Publication No. 2005-125581

DISCLOSURE OF THE INVENTION

PROBLEM TO BE SOLVED BY THE INVENTION

An object of the present invention is to provide a pellet mixture, a composition and a molded article of a carbon fiber reinforced polypropylene resin showing superior strength, in particular superior flexural strength, and a method of manufacturing the above pellet mixture.

MEANS FOR SOLVING PROBLEM

The present inventors found that a molded article which is obtained by injection molding a mixture of, for example, pellets of long fibers and pellets of an acid modified polypropylene resin, the pellets of long fibers being obtained by impregnating carbon fibers with a polypropylene resin essentially unmodified with acid, shows superior mechanical properties. The present invention was thus completed.

That is, a first aspect of the present invention is a pellet mixture comprising pellets (X) containing a polypropylene resin (A) essentially unmodified with acid and carbon fibers (C); and pellets (Y) containing an acid modified polypropylene resin (B).

A second aspect of the present invention is the pellet mixture according to the first aspect, wherein the carbon fibers (C) are impregnated with the polypropylene resin (A).

A third aspect of the present invention is the pellet mixture according to the first or second aspect, wherein the mass average length (L) of the carbon fibers (C) in the pellets (X) is from 5 mm to 20 mm.

A fourth aspect of the present invention is the pellet mixture according to any one of the first to third aspects, wherein the fiber diameter of the carbon fibers (C) in the pellets (X) is from 5 μm to 12 μm.

A fifth aspect of the present invention is the pellet mixture according to any one of the first to fourth aspects, wherein the content of the carbon fibers (C) in the pellets (X) is from 10 mass % to 50 mass% relative to the total mass of the pellets (X).

A sixth aspect of the present invention is the pellet mixture according to any one of the first to fifth aspects, wherein the amount of acid in the polypropylene resin (A) is 0.005 mass% or less in terms of maleic anhydride equivalence.

A seventh aspect of the present invention is the pellet mixture according to any one of the first to sixth aspects, wherein the melt flow rate (MFR) of the polypropylene resin (A) (as measured at a temperature of 230°C and a load of 2.16 kg in accordance with JIS-K7210) is from 5 g/10 minutes to 70 g/10 minutes.

An eighth aspect of the present invention is the pellet mixture according to any one of the first to seventh aspects, wherein the content of the polypropylene resin (A) in the pellet mixture is from 1 mass% to 94 mass% relative to the total mass of the pellet mixture.

A ninth aspect of the present invention is the pellet mixture according to any one of the first to eighth aspects, wherein the acid modified polypropylene resin (B) is a polypropylene resin modified with unsaturated carboxylic acid or a derivative thereof.

A tenth aspect of the present invention is the pellet mixture according to any one of the first to ninth aspects, wherein the amount of acid in the acid modified polypropylene resin (B) is from 0.5 mass% to 10 mass% in terms of maleic anhydride equivalence.

An eleventh aspect of the present invention is the pellet mixture according to any one of the first to tenth aspects, further comprising pellets (Z) of a polypropylene resin (D) having a melt flow rate (MFR) of from 0.1 g/10 minutes to 4 g/10 minutes (as measured at a temperature of 230°C and a load of 2.16 kg in accordance with JIS-K7210).

Further, a twelfth aspect of the present invention is a molded article obtained by molding the pellet mixture according to any one of the first to eleventh aspects.

A thirteenth aspect of the present invention is the molded article according to the twelfth aspect, wherein the mass average length (L') of the carbon fibers (C) in the molded article is from 1 mm to 7 mm.

A fourteenth aspect of the present invention is the molded article according to any one of the twelfth or thirteenth aspects, wherein the amount of acid in the molded article is from 0.01 mass% to 0.5 mass% in terms of maleic anhydride equivalence.

Further, a fifteenth aspect of the present invention is a method of manufacturing a pellet mixture, comprising mixing carbon fibers (C) with a polypropylene resin (A) in a molten state to obtain pellets (X), and mixing the pellets (X) with pellets (Y) containing an acid modified polypropylene resin (B).

A sixteenth aspect of the present invention is the method of manufacturing a pellet mixture according to the fifteenth aspect, comprising melting the polypropylene resin (A) in an extruder; feeding a tow of the carbon fibers (C) to a die part of the extruder; performing drawing to mix the carbon fibers (C) with the polypropylene resin (A); then performing cutting with a side cut pelletizer to obtain the pellets (X); and mixing the pellets (X) with the pellets (Y) containing the acid modified polypropylene resin (B).

Further, a seventeenth aspect of the present invention is a carbon fiber reinforced polypropylene resin composition, which is obtained by using pellets (X) containing a polypropylene resin (A) essentially unmodified with acid and carbon fibers (C); and pellets (Y) containing an acid modified polypropylene resin (B).

An eighteenth aspect of the present invention is the carbon fiber reinforced polypropylene resin composition according to the seventeenth aspect, which is obtained by melt kneading the pellets (X) and the pellets (Y).

A nineteenth aspect of the present invention is the carbon fiber reinforced polypropylene resin composition according to the seventeenth or eighteenth aspect, which is obtained by melt kneading the pellets (X), the pellets (Y) and further pellets (Z) of a polypropylene resin (D).

Moreover, the present invention has the following aspects from another point of view.

Namely, a twentieth aspect of the present invention is a carbon fiber reinforced polypropylene resin composition containing a polypropylene resin (A) essentially unmodified with acid and carbon fibers (C); and containing pellets (X) essentially free from an acid modified polypropylene resin (B), and an acid modified polypropylene resin (B).

A twenty-first aspect of the present invention is a molded article obtained from the above resin composition.

A twenty-second aspect of the present invention is a method of manufacturing the above resin composition, comprising adding and mixing an acid modified polypropylene resin (B) with pellets (X) obtained by adding carbon fibers (C) to an acid unmodified polypropylene resin (A) in a molten state.

A twenty-third aspect of the present invention is a method of manufacturing the above molded article, comprising melt molding the above resin composition.

A twenty-fourth aspect of the present invention is a carbon fiber reinforced polypropylene resin composition, wherein the mass average length (L) of carbon fibers in pellets (X) is 5 mm ≤ (L) ≤ 20 mm.

EFFECT OF THE INVENTION

According to the present invention, a pellet mixture, a composition and a molded article of a carbon fiber reinforced polypropylene resin showing superior strength, in particular superior flexural strength can be obtained by a manufacturing method having an excellent balance between impregnation and interface strength.

The manufacturing method according to the present invention shows the excellent balance between impregnation and interface strength, and thus can provide a pellet mixture, a composition and a molded article of a carbon fiber reinforced polypropylene resin showing superior strength, in particular superior flexural strength.

MODE(S) FOR CARRYING OUT THE INVENTION

Below, the present invention will be described with reference to specific examples for the embodiments of the present invention.

<Polypropylene resin (A)>

The polypropylene resin (A) used in the present embodiments is essentially unmodified with acid.

The phrase "essentially unmodified with acid" means that it is not modified with unsaturated carboxylic acid or a derivative of unsaturated carboxylic acid selected from acid anhydrides, esters, amides or metal salts of unsaturated carboxylic acid. Further, as a guide, 95% or more of the total content of the polypropylene resin (A) is not subjected to the aforementioned modification.

The amount of acid in the polypropylene resin (A) is 0.005 mass% or less in terms of maleic anhydride equivalence, preferably 0.002 mass% or less.

The term "amount of acid" as used herein refers to a value computed by multiplying the number of moles of unsaturated carboxylic acid introduced into the system or a derivative of unsaturated carboxylic acid selected from acid anhydrides, esters, amides or metal salts of unsaturated carboxylic acid with the molecule weight of maleic anhydride, which is then divided back by the mass of the polypropylene resin (A). However, in a case where the amount of unsaturated carboxylic acid or a derivative of unsaturated carboxylic acid introduced into the system is unknown, it may be computed by being divided back by an acid value obtained from neutralization titration.

As the polypropylene resin (A), an ethylene-propylene copolymer or propylene-$\alpha$-olefin copolymer can be used in addition to a propylene homopolymer. Specific examples include propylene homopolymer, ethylene-propylene random copolymer, ethylene-propylene block copolymer, propylene-butene random copolymer, propylene-hexene random copolymer or the like.

Among these, a propylene homopolymer or an ethylene-propylene block copolymer is preferred in view of high strength to be obtained, and a propylene homopolymer is more preferred in view of a high flexural modulus to be obtained.

When a copolymer of propylene and other monomers is used, the content of propylene units in the polypropylene resin (A) is preferably 50 mass% or more, more preferably 80 mass% or more in view of a high flexural modulus to be obtained.

The melt flow rate (MFR) of the polypropylene resin (A) (as measured at a temperature of 230°C and a load of 2.16 kg in accordance with JIS-K7210) is preferably from 5 g/10 minutes to 70 g/10 minutes, more preferably from 30 g/10 minutes to 70 g/10 minutes. In a case where MFR is 5 g/10 minutes or more, workability in a molding process is good. In a case where MFR is 70 g/10 minutes or less, the impact strength of a molded article to be obtained is not decreased.

A commercially available product can be used as the polypropylene resin (A). Examples include MA1B (MFR = 21 g/10 minutes), MA3 (MFR = 11 g/10 minutes), MA04A (MFR = 40 g/10 minutes), MA06A (MFR = 60 g/10 minutes), MG03B (MFR = 30 g/10 minutes), BC03B (MFR = 30 g/10 minutes) or BC06C (MFR = 60g/10 minutes) from Japan Polypropylene Corporation; J-2003GP (MFR = 20 g/10 minutes) from Idemitsu Petrochemical Co., Ltd.; J-3000GP (MFR = 30 g/10 minutes), J106MG (MFR = 15 g/10 minutes) or J708UG (MFR = 45 g/10 minutes) from Prime Polymer Co., Ltd.

<Carbon fibers (C)>

Any PAN based (HT, IM, HM), pitch based (GP, HM) or rayon based fibers can be used as the carbon fibers (C) used in the present embodiments, but PAN based fibers are preferred in view of high strength to be obtained.

The carbon fibers (C) preferably have a fiber diameter of from 5 $\mu$m to 12 $\mu$m, for example, from 5 $\mu$m to 10 $\mu$m, and preferably from 6 $\mu$m to 8 $\mu$m. In a case where the fiber diameter is 5 $\mu$m or more, the surface area of a fiber is small, showing improved moldability. In a case where the fiber diameter is 12 $\mu$m or less, the aspect ratio of a fiber is large, showing excellent reinforcing effects.

The fiber diameter of a carbon fiber can be measured under an electron microscope. A fiber diameter being within the aforementioned range as used herein shall refer to a case where 90% or more of fiber diameters visually measured, for example under an electron microscope, fall within the aforementioned range.

Methods of manufacturing carbon fibers having a fiber diameter within the aforementioned range include, for example, those described in Japanese Patent Application Laid-Open No. 2004-11030, Japanese Patent Application Laid-Open No. 2001-214334 or Japanese Patent Application Laid-Open No. H05-261792.

The carbon fibers (C) preferably have surfaces subjected to electrolytic treatment, and are more preferably further subjected to surface treatment with a surface treatment agent.

Surface treatment agents include, for example, epoxy based sizing agents, urethane based sizing agents, nylon based sizing agents or olefin based sizing agents. Among these, epoxy based sizing agents are preferred. Advantageously, tensile strength and flexural strength can be improved by performing surface treatment. A commercially available product may be used as the above carbon fibers subjected to surface treatment.

A commercially available product can be used as the carbon fibers (C). Examples include Pyrofil® CF Tow TR50S 6L, TRH50 12L, TRH50 18M, TR50S 12L, TR50S 15L, MR40 12M, MR60H 24P, MS40 12M, HR40 12M, HS40 12P, P330 60K, WCF 50K, Pyrofil® Chopped Fiber TR066, TR066A, TR068, TR06U, TR06NE, TR06G, TR06UL, TR06NL or MR06NE from Mitsubishi Rayon Co., Ltd. Among these, CF Tow is preferred in view of high strength to be obtained, and P330 60K or WCF 50K is more preferred in view of productivity.

<Pellets (X)>

The pellets (X) according to the present embodiments contain the polypropylene resin (A) and the carbon fibers (C). Further, the pellets (X) according to the present embodiments do not substantially contain the acid modified polypropylene resin (B).

The carbon fibers (C) in the pellets (X) are in a state where they are impregnated with the polypropylene resin (A). The term "impregnation" as used herein refers to a state where the polypropylene resin (A) is permeated into a portion or all of a bundle of the carbon fibers (C), and the surfaces of the carbon fibers (C) make contact with the polypropylene resin (A), and the carbon fibers (C) are integrated together with the polypropylene resin (A).

The content of the polypropylene resin (A) in the pellets (X) is from 50 mass% to 90 mass%. The content of the carbon fibers (C) in the pellets (X) is from 10 mass% to 50 mass%.

In a case where the content of the carbon fibers (C) in the pellets (X) is 10 mass% or more, the reinforcing effect of the carbon fibers can be high, showing significantly improved strength and rigidity. In a case where the content of the carbon fibers (C) in the pellets (X) is 50 mass% or less, tensile elongation is not decreased. Further, the above content may be 20 to 40 mass%.

Methods of manufacturing the pellets (X) include, for example, a method comprising mixing the polypropylene resin (A) in a molten state with the carbon fibers (C), then cutting and cooling.

Methods of mixing the polypropylene resin (A) in a molten state with the carbon fibers (C) include, for example, [1] a method comprising melting the polypropylene resin (A) in an extruder, feeding a tow of the carbon fibers (C) to a die part of the extruder, and performing drawing and mixing; and [2] a method comprising melting the polypropylene resin (A) in an extruder, and feeding chopped fibers of the carbon fibers (C) from a side feeder. Among these, the method according to [1] is preferred since the fiber lengths of the carbon fibers (C) can be maintained in a long state.

Methods of cutting include, for example, a method in which a side cut pelletizer is used, a method in which a drum cutter is used or a method in which a hot cut pelletizer is used. The term "pelletizer" as used herein refers to a device having a cutter which is used for manufacturing pellets from a material extruded from an external extruder.

When using the method according to [1], preferred is a method in which a side cut pelletizer is used. By using a side cut pelletizer, it is possible to reduce the development of "faulty cut pellets" where the carbon fibers (C) are not cut to a desired length.

The mass average length (L) of the carbon fibers (C) in the pellets (X) is from 5 mm to 20 mm, preferably from 8 mm to 12 mm. In a case where the mass average length (L) is 5 mm or more, the reinforcing effect of the carbon fibers can be high, showing high strength and rigidity. In a case where the mass average length (L) is 20 mm or less, a molding process will not be difficult.

When the method according to [1] is used, and a side cut pelletizer is used for cutting, the lengths of the carbon fibers (C) in the pellets (X) are the same as those of pellets. In this case, the mass average length (L) of the carbon fibers (C) can be computed by measuring the lengths of the pellets (X).

<Acid modified polypropylene resin (B)>

The acid modified polypropylene resin (B) used in the present embodiments is a polypropylene resin modified (carboxylic acid modification) with unsaturated carboxylic acid or a derivative of unsaturated carboxylic acid selected from acid anhydrides, esters, amides or metal salts of unsaturated carboxylic acid.

In this case, a polypropylene resin may be a homopolymer of propylene or may be a copolymer of propylene and other monomers.

Examples of the acid modified polypropylene resin (B) include [1] those in which unsaturated carboxylic acid or a derivative of unsaturated carboxylic acid is graft-polymerized with a propylene homopolymer, an ethylene-propylene copolymer, a propylene-$\alpha$-olefin copolymer or the like; [2] those in which unsaturated carboxylic acid or a derivative of unsaturated carboxylic acid is random copolymerized with propylene; [3] those in which unsaturated carboxylic acid or a derivative of unsaturated carboxylic acid is block copolymerized with propylene; or [4] those in which unsaturated carboxylic acid or a derivative of unsaturated carboxylic acid is further graft polymerized with the above copolymer.

Examples of [1] include, for example, those in which unsaturated carboxylic acid such as maleic anhydride, acrylic acid or methacrylic acid is graft polymerized with a polypropylene resin such as a propylene homopolymer, an ethylene-propylene random copolymer, an ethylene-propylene block copolymer, a propylene-butene copolymer or a propylene-hexene copolymer, and then modification is performed; and the like.

Examples of [2] include, for example, those in which propylene is copolymerized with acrylic acid, methacrylic acid, maleic anhydride or the like, and then modification is performed.

Unsaturated carboxylic acids include, for example, maleic acid, fumaric acid, itaconic acid, acrylic acid or methacrylic acid. Derivatives of unsaturated carboxylic acid include, for example, acid anhydrides such as maleic anhydride or itaconic acid anhydride; and metal salts such as sodium methacrylate.

Among these, acrylic acid, methacrylic acid or maleic anhydride is preferred in view of the ease of manufacture.

The amount of acid in the acid modified polypropylene resin (B) is from 0.5 mass% to 10 mass% in terms of maleic anhydride equivalence, more preferably from 1.0 mass% to 5.0 mass%. In a case where the amount of acid falls within this range, an effect of the acid modified polypropylene resin (B) for improving interface strength can be sufficiently obtained.

The amount of acid as used herein is to be computed by multiplying the number of moles of unsaturated carboxylic acid introduced into the system or a derivative of unsaturated carboxylic acid selected from acid anhydrides, esters, amides or metal salts of unsaturated carboxylic acid with the molecule weight of maleic anhydride, which is then divided back by the mass of the acid modified polypropylene resin (B). However, when the amount of unsaturated carboxylic acid or a derivative of unsaturated carboxylic acid introduced into the system is unknown, it may be computed by being divided back by an acid value obtained from neutralization titration.

A commercially available product can be used as the acid modified polypropylene resin (B). Examples include POLYBOND 3200 or POLYBOND 3150 from Chemtura Corporation; Umex 1001, Umex 1010, Umex 1003 or Umex 1008 from Sanyo Chemical Industries, Ltd.; Admer QE800 or Admer QE810 from Mitsui Chemicals, Inc.; and Toyotac H-1000P from Toyo Kasei Co., Ltd.

A material containing the acid modified polypropylene resin (B) may be in the form of a pellet, powder, or water dispersion. In the present embodiments, however, a material in which the acid modified polypropylene-resin (B) is contained in pellets is used as described below.

<Pellet (Y)>

The pellets (Y) according to the present embodiments contain the acid modified polypropylene resin (B).

Methods of manufacturing the pellets (Y) include, for example, a method comprising manufacturing the acid modified polypropylene resin (B) with an extruder, and then performing strand cut or hot cut; a method comprising strand cutting or hot cutting a melt-kneaded resin containing the acid modified polypropylene resin (B); a method comprising pressure compressing a powder containing the acid modified polypropylene resin (B); a method comprising cutting a sheet containing the acid modified polypropylene resin (B); or a method comprising pulverizing a mass containing the acid modified polypropylene resin (B).

<Polypropylene resin (D)>

The polypropylene resin (D) used in the present embodiments is essentially unmodified with acid.

The phrase "essentially unmodified with acid" as used herein has the same meaning as described for the polypropylene resin (A).

The amount of acid in the polypropylene resin (D) is 0.005 mass% or less in terms of maleic anhydride equivalence, preferably 0.002 mass% or less.

The amount of acid as used herein is to be computed by multiplying the number of moles of unsaturated carboxylic acid introduced into the system or a derivative of unsaturated carboxylic acid selected from acid anhydrides, esters, amides or metal salts of unsaturated carboxylic acid with the molecule weight of maleic anhydride, which is then divided back by the mass of the acid modified polypropylene resin (D). However, when the amount of unsaturated carboxylic acid or a derivative of unsaturated carboxylic acid introduced into the system is unknown, it may be computed by being divided back by an acid value obtained from neutralization titration.

As the polypropylene resin (D), an ethylene-propylene copolymer or propylene-$\alpha$-olefin copolymer may be used in addition to a propylene homopolymer. Specific examples include a propylene homopolymer, an ethylene-propylene random copolymer, an ethylene-propylene block copolymer, a propylene-butene random copolymer or a propylene-hexene random copolymer.

Among these, a propylene homopolymer or an ethylene-propylene block copolymer is preferred in view of high strength to be obtained, and a propylene homopolymer is more preferred in view of a high flexural modulus to be obtained.

When a copolymer of propylene and other monomers is used, the content of propylene units in the polypropylene resin (D) is preferably 50 mass% or more, more preferably 80 mass% or more, in view of a high flexural modulus to be obtained.

The melt flow rate (MFR) of the polypropylene resin (D) (as measured at a temperature of 230°C and a load of 2.16 kg in accordance with JIS-K7210) is from 0.1 g/10 minutes to 4 g/10 minutes, and preferably from 0.3 g/10 minutes to 2 g/10 minutes.

In a case where the melt flow rate falls within this range, a molded article having superior impact strength can be obtained.

A commercially available product can be used as the polypropylene resin (D). Examples include EA9 (MFR = 0.5 g/10 minutes), EA8W (MFR = 0.8 g/10 minutes), EA6A (MFR = 1.9 g/10 minutes), FY6 (MFR = 2.5 g/10 minutes), EG8B (MFR = 0.8 g/10 minutes), BC8 (MFR = 1.8 g/10 minutes) or BC6C (MFR = 2.5 g/10 minutes) from Japan Polypropylene Corporation.

<Pellet (Z)>

The pellets (Z) according to the present embodiments contain the polypropylene resin (D).

Methods of manufacturing the pellets (Z) include, for example, a method comprising polymerizing the polypropylene resin (D) and then performing strand cut or hot cut; a method comprising strand cutting or hot cutting a melt-kneaded resin containing the polypropylene resin (D); a method comprising pressure compressing a powder containing the polypropylene resin (D); a method comprising cutting a sheet containing the polypropylene resin (D); and a method comprising pulverizing a mass containing the polypropylene resin (D).

<Pellet mixture>

The pellet mixture according to the present embodiments contains at least the pellets (X) containing the polypropylene resin (A) essentially unmodified with acid and the carbon fibers (C); and the pellets (Y) containing the acid modified polypropylene resin (B).

The pellet mixture may further contain the pellets (Z) containing the polypropylene resin (D). By including the pellets (Z) containing the polypropylene resin (D), the Charpy notched impact strength of the resulting molded article can be improved.

Since the polypropylene resin (D) has an MFR of from 0.1 g/10 minutes to 4 g/10 minutes, impregnation into the carbon fibers (C) is difficult. Meanwhile, by using the pellets (Z) in addition to the pellets (X), the pellet mixture will sufficiently contain the polypropylene resin (D), and the Charpy notched impact strength can be improved.

The pellet mixture according to the present embodiments may contain other polypropylene resins as "other components" other than the acid modified polypropylene resin (B) and the polypropylene resin (D) in order to adjust the content of the carbon fibers (C) and the like.

By using other polypropylene resins, pellet mixtures having different contents of the carbon fibers (C) can be obtained with the same pellets (X).

Other polypropylene resins are essentially unmodified with acid.

The phrase "essentially unmodified with acid" means that a polypropylene resin is not modified with unsaturated carboxylic acid or a derivative of unsaturated carboxylic acid selected from acid anhydrides, esters, amides or metal salts of unsaturated carboxylic acid. Further, as a guide, 95% or more of the total content of the polypropylene resin (A) is not subjected to the aforementioned modification. More specifically, the amount of acid falls within the range of values described below.

The amount of acid in other polypropylene resins is 0.005 mass% or less in terms of maleic anhydride equivalence, preferably 0.002 mass% or less.

The amount of acid as used herein is to be computed by multiplying the number of moles of unsaturated carboxylic acid introduced into the system or a derivative of unsaturated carboxylic acid selected from acid anhydrides, esters, amides or metal salts of unsaturated carboxylic acid with the molecule weight of maleic anhydride, which is then divided back by the mass of the polypropylene resin. However, when the amount of unsaturated carboxylic acid or a derivative of unsaturated carboxylic acid introduced into the system is unknown, it may be computed by being divided back by an acid value obtained from neutralization titration.

As other polypropylene resins, an ethylene-propylene copolymer or a propylene-$\alpha$-olefin copolymer may be used in addition to a propylene homopolymer. Specific examples include a propylene homopolymer, an ethylene-propylene random copolymer, an ethylene-propylene block copolymer, a propylene-butene random copolymer or a propylene-hexene random copolymer. Among these, a propylene homopolymer or an ethylene-propylene block copolymer is preferred in view of high strength to be obtained, and a propylene homopolymer is more preferred in view of a high flexural modulus to be obtained.

When a copolymer of propylene and other monomers is used, the content of propylene units in the polypropylene resin is preferably 50 mass% or more, more preferably 80 mass% or more in view of a high flexural modulus to be obtained.

The melt flow rates (MFR) of other polypropylene resins (as measured at a temperature of 230°C and a load of 2.16 kg in accordance with JIS-K7210) are preferably from 5 g/10 minutes to 70 g/10 minutes, more preferably from 30 g/10 minutes to 70 g/10 minutes. In a case where MFR is 5 g/10 minutes or more, workability in a molding process is good. In a case where MFR is 70 g/10 minutes or less, the impact strength of the resulting molded article is not decreased.

Commercially available products can be used as other polypropylene resins. Examples include MA1B (MFR = 21 g/10 minutes), MA3 (MFR = 11 g/10 minutes), MA04A (MFR = 40 g/10 minutes), MA06A (MFR = 60 g/10 minutes), MG03B (MFR = 30 g/10 minutes), BC03B (MFR = 30 g/10 minutes) or BC06C (MFR = 60 g/10 minutes) from Japan Polypropylene Corporation; J-2003GP (MFR = 20 g/10 minutes) from Idemitsu Petrochemical Co., Ltd.; J-3000GP (MFR = 30 g/10 minutes), J106MG (MFR = 15 g/10 minutes) or J708UG (MFR = 45 g/10 minutes) from Prime Polymer

Co., Ltd.

The forms of "other components" are preferably pellets in view of good handling properties.

<Content in pellet mixture>

The content of the pellets (X) in a pellet mixture is preferably from 40 mass% to 99.5 mass%, more preferably from 60 mass% to 95 mass%.

The content of the pellets (Y) in a pellet mixture is preferably from 0.5 mass% to 16 mass%, more preferably from 0.5 mass% to 5 mass%.

The content of the pellets (Z) in a pellet mixture is preferably from 0 mass% to 50 mass%, more preferably from 0 mass% to 20 mass%.

In a case where "other components" are contained, the content of the pellets (X) in a pellet mixture is preferably from 40 mass% to 99 mass%, more preferably from 60 mass% to 95 mass%.

The content of the pellets (Y) in a pellet mixture is preferably from 0.5 mass% to 16 mass%, more preferably from 0.5 mass% to 5 mass%.

The content of the pellets (Z) in a pellet mixture is preferably from 0 mass% to 20 mass%, more preferably from 0 mass% to 15 mass%.

The content of "other components" in a pellet mixture is preferably from 0.5 mass% to 59.5 mass%, more preferably from 4.5 mass% to 39.5 mass%.

In a case where the contents fall within these ranges, the balance between the flexural strength and impact strength of the resulting molded article is good. Further, a masterbatch such as a coloring agent or a processing auxiliary agent may also be included within a rage in which these properties are not impaired.

The content of the polypropylene resin (A) in a pellet mixture is from 1 mass% to 94 mass%, preferably from 50 mass% to 90 mass%.

In a case where the content of the polypropylene resin (A) in a pellet mixture is 1 mass% or more, tensile elongation can be improved. In a case where the content is 94 mass% or less, sufficient interface strength can be obtained to improve the strength of the resulting molded article.

The pellets (X), the pellets (Y), and optionally the pellets (Z) and "other components" may be mixed in a pellet mixture.

The pellets (X), the pellets (Y), and optionally the pellet (Z) and "other components" are preferably mixed by dry blending. Dry blending refers to blending without melting, dissolution and the like.

Methods of dry blending include, for example, those using a tumbler, a Henschel mixer, hand blending, a V-type blender or a screw. A method in which a tumbler is used is preferred since the dry blending of pellets can be efficiently performed.

A pellet mixture obtained in this way can be used in a method of manufacturing a carbon fiber reinforced polypropylene resin composition (that is, used as a raw material for a carbon fiber reinforced polypropylene resin composition) and in a method of manufacturing a molded article of a resin (that is, used as a raw material for a molded article) as described below.

<Carbon fiber reinforced polypropylene resin composition>

The carbon fiber reinforced polypropylene resin composition according to the present embodiments refers to a melt kneaded pellet mixture.

The carbon fiber reinforced polypropylene resin composition can be obtained by melt kneading a pellet mixture. Melt kneading refers to performing kneading at a temperature where one or more components of a pellet mixture melt. A kneading method is preferably performed with a screw, and more preferably with a uniaxial screw of an injection molding machine.

Various resin additives may be blended with the carbon fiber reinforced polypropylene resin composition according to the present embodiments if desired.

Resin additives include, for example, coloring agents such as pigments; antioxidizing agents such as phenol based or phosphorus based agents; light stabilizers such as hindered amine based stabilizers; ultraviolet absorbers such as benzotriazol based absorbers; metal deactivators such as nitrogen compounds; carbon black; nucleating agents such as sorbitol based agents; parting agents; lubricants such as fatty acid amide based lubricants; antistatic agents such as non-ionic agents; glass fibers; inorganic fillers; organic fillers other than the carbon fibers (C); impact resistance modifiers; melt tension improvers; flame retardants such as halogenated compounds; chemical foaming agents such as sodium bicarbonate or citric acid; physical foaming agents such as carbon dioxide gas, or nitrogen; neutralizers such as inorganic compounds; antibacterial/antifungal agents such as thiazole based agents; process oils (compounded oils); plasticizing agents; surfactants such as non-ionic surfactants; thermoplastic resins such as polyolefines, polyamide or polyester other than a polypropylene resin; elastomers (gum); and the like.

These resin additives may be used alone or in combination of two or more.

Further, they may be added to a resin composition, or may be added to the aforementioned pellets. Furthermore, two or more of them may be added to each of the aforementioned pellets.

<Molded article>

The molded article according to the present embodiments can be obtained by melt molding a pellet mixture. Melt molding methods include, for example, injection molding or compression molding.

By performing melt molding, the interface strength between a polypropylene resin and the carbon fibers (C) can be enhanced.

The mass average length (L') of the carbon fibers (C) in a molded article is from 1 mm to 7 mm, preferably from 3 mm to 6 mm.

Further, the distribution of the mass average length (L') of the carbon fibers (C) contained in a molded article preferably comprises 40 mass% or more, more preferably 50 mass% or more of carbon fibers having a length of from 2 mm to 8 mm. In a case where the distribution of the mass average length (L') of the carbon fibers (C) falls within this range, the carbon fibers in a molded article show a good dispersion state, enhancing a reinforcing effect of the carbon fibers.

Methods of measuring the mass average length (L') of the carbon fibers (C) in a molded article include, for example, a method comprising removing a polypropylene resin from a molded article using a solvent, and observing the remaining carbon fibers under a light microscope; a method comprising performing pyrolysis, for example, at 500°C for 30 minutes under a nitrogen atmosphere to remove a polypropylene resin, and observing the remaining carbon fibers under a light microscope; a method comprising observing a fracture surface of a molded article under a light microscope and the like; and a method comprising observing with an X-ray CT.

The amount of acid in a molded article is from 0.01 mass% to 0.5 mass%, preferably from 0.02 mass% to 0.1 mass% in terms of maleic anhydride equivalence.

The amount of acid in a molded article can be computed from the amounts of acid and the mass ratio of the polypropylene resin (A), the acid modified polypropylene resin (B) and the polypropylene resin (D). However, when the amounts of acid and/or the mass ratio of these components are unknown, they may be computed by being divided back from acid values obtained from neutralization titration.

Note that the amount of acid in a molded article is to be computed including the mass of the carbon fibers in the molded article.

In a modified aspect of the present embodiments, the aforementioned configurations may be used in appropriate combinations.

EXAMPLES

Below, the embodiments of the present invention will be further described in detail with reference to Examples. Note that the terms "part" and "%" in the following descriptions mean "part by mass" and "mass%" unless otherwise stated.

<Evaluation method>

Tensile tests:

A dumbbell test piece having a width of 10 mm, a thickness of 4 mm and a length in a parallel portion of 80 mm was used in accordance with ISO527.

Flexural tests:

A three-point flexural test was performed using a strip test piece having a width of 10 mm, a thickness of 4 mm and a length of 80 mm in accordance with ISO178.

Charpy impact tests:

Test pieces with and without a notch were each used in accordance with ISO179.

Specific gravity:

The Archimedes method was used for measurements in accordance with ISO1183.

Mass average length (L'):

A portion of a flexural test piece was subjected to pyrolysis treatment at 550°C for 2 hours in an electric furnace to remove polymer components. Subsequently, 200 or more of the remaining carbon fibers (C) were observed under a light microscope. The length (1) of each fiber was measured, and the mass average length (L') and the proportion of carbon fibers having a length of from 2 mm to 8 mm were computed.

The mass average length (L') of the carbon fibers (C) in a molded article is to be computed by the following expression.

$$\texttt{Mass average length (L') = } \sum (l^2) \texttt{ / } \sum (l)$$

<Raw material>

Polypropylene resin (A-1):

Novatec PP MA06A (Japan Polypropylene Corporation, MFR 60 g/10 minutes, amount of acid 0%)

Polypropylene resin (A-2):

Novatec PP MA04A (Japan Polypropylene Corporation, MFR 40 g/10 minutes, amount of acid 0%)

Acid modified polypropylene resin used for the pellets (X) in Comparative Examples:

Umex 1001 (Sanyo Chemical Industries, Ltd., amount of acid 2.27%)

Carbon fibers (C):

Pyrofil CF Tow TR50S 15L (Mitsubishi Rayon Co., Ltd., treated with an epoxy based sizing agent, a weight per area of 1,000 mg/m, a tensile strength of 4,900 MPa, a tensile modulus of 240 GPa, a fiber diameter of 7 $\mu$m)

Acid modified polypropylene resin (B):

Umex 1001 (Sanyo Chemical Industries, Ltd., amount of acid 2.27%)

Polypropylene resin (D):

Novatec PP EA9 (Japan Polypropylene Corporation, MFR 0.5 g/10 minutes, amount of acid 0%)
Other polypropylene resins used as "other components"
Novatec PP MA06A (Japan Polypropylene Corporation, MFR 60 g/10 minutes, the amount of acid 0% )
Novatec PP MA04A (Japan Polypropylene Corporation, MFR 40 g/10 minutes, amount of acid 0% )
Note that the amount of acid in each polypropylene resin described above was computed from a manufacturer's catalog value.

<Example 1>

The polypropylene resin (A) was plasticized with a 30$\varphi$ twin screw extruder, and compounded with the carbon fibers (C) using a wire coating die set to 280°C at a line speed of 40 m/minutes, and cut to manufacture long fiber pellets (X) having a length of 10 mm. At this time, the mass average length (L) of the carbon fibers (C) was 10 mm.
The pellets (Y) of the acid modified polypropylene resin (B) and the pellets of MA06A as "other components" were added and mixed with the resulting pellets (X) to obtain a pellet mixture.
The resulting pellet mixture was injection molded at a cylinder temperature of 230°C and a mold temperature of 80°C to prepare a test piece.

<Examples 2 to 8 and Comparative Examples 1 to 8>

Test pieces were prepared as in Example 1 except that pellet mixtures were obtained according to the compositions shown in Tables 1 to 3.
Each composition and measurement results of physical properties are shown in Tables 1 to 4.

(Abbreviations in Tables)

Unmodified PP: a polypropylene resin unmodified with acid
Acid modified PP: an acid modified polypropylene resin
CF: carbon fiber

[Table 1]

| | Pellets(X) | | | Pellets(Y) | Other components | Total composition | | | Fiber length(L') | |
|---|---|---|---|---|---|---|---|---|---|---|
| | PP (A-1) MA06A | Acid modified PP | CF (C) | Acid modified PP (B) | Other PPs MA06A | Unmodified PP | Acid modified PP | CF | Mass average [mm] | Proportion of 2 to 8 mm |
| Example 1 | 24 | - | 20 | 4 | 52 | 76 | 4 | 20 | 4.9 | 67% |
| Comparative Example 1 | 19 | 3 | 20 | 1 | 57 | 76 | 4 | 20 | 7.2 | 23% |
| Comparative Example2 | 25 | - | 20 | - | 55 | 80 | - | 20 | 4.4 | 91% |

[Table 2]

| | Flexural tests | | Charpy impact tests | | Tensile tests | | Specific gravity |
|---|---|---|---|---|---|---|---|
| | Strength [MPa] | Elastic modulus [MPa] | Without notch [kJ/m$^2$] | With notch [kJ/m$^2$] | Elongation [%] | Strength [MPa] | |
| Example 1 | 229 | 12,400 | 31 | 9 | 2.9 | 120 | 1.00 |
| Comparative Example 1 | 196 | 10,700 | 24 | 10 | 2.7 | 107 | 1.00 |
| Comparative Example2 | 153 | 13,300 | 27 | 26 | 2.1 | 72 | 0.99 |

[Table 3]

| | Pellets(X) | | | | Pellets(Y) | Pellets(Z) | Other components | Total composition | | |
|---|---|---|---|---|---|---|---|---|---|---|
| | PP (A-1) MA06A | PP (A-2) MA04A | Acid modified PP | CF (C) | Acid modified PP (B) | PP (D) EA9 | Other PPs MA04A | Unmodified PP | Acid modified PP | CF |
| Example 2 | 79.0 | - | - | 20 | 1.0 | - | - | 79.0 | 1.0 | 20 |
| Example 3 | 78.4 | - | - | 20 | 1.6 | - | - | 78.4 | 1.6 | 20 |
| Example 4 | 68.6 | - | - | 30 | 1.4 | - | - | 68.6 | 1.4 | 30 |
| Example 5 | 58.8 | - | - | 40 | 1.2 | - | - | 58.8 | 1.2 | 40 |
| Example 6 | - | 45.0 | - | 30 | 1.4 | - | 23.6 | 68.6 | 1.4 | 20 |
| Example 7 | - | 45.0 | - | 30 | 0.7 | 7.0 | 17.3 | 69.3 | 0.7 | 20 |
| Example 8 | - | 45.0 | - | 30 | 1.4 | 7.0 | 16.6 | 68.6 | 1.4 | 30 |
| Comparative Example3 | 79.0 | - | 1.0 | 20 | - | - | - | 79.0 | 1.0 | 20 |
| Comparative Example4 | 80.0 | - | - | 20 | - | - | - | 80.0 | - | 20 |
| Comparative Example5 | 78.4 | - | 1.6 | 20 | - | - | - | 78.4 | 1.6 | 20 |
| Comparative Example6 | 58.8 | - | 1.2 | 40 | - | - | - | 58.8 | 1.2 | 40 |
| Comparative Example7 | - | 45.0 | - | 30 | - | - | 25.0 | 70.0 | - | 30 |
| Comparative Example8 | - | 45.0 | - | 30 | - | 7.0 | 18.0 | 70.0 | - | 30 |

14

[Table 4]

| | Flexural tests | | Charpy impact tests | | Tensile tests | | Specific gravity |
|---|---|---|---|---|---|---|---|
| | Strength [MPa] | Elastic modulus [MPa] | Without notch [kJ/m$^2$] | With notch [kJ/m$^2$] | Elongation [%] | Strength [MPa] | |
| Example 2 | 234 | 15,600 | 31 | 13 | 2.7 | 133 | 1.03 |
| Example 3 | 219 | 13,100 | 31 | 9 | 2.7 | 125 | 1.01 |
| Example 4 | 225 | 17,100 | 28 | 10 | 2.4 | 131 | 1.05 |
| Example 5 | 221 | 20,100 | 22 | 11 | 1.7 | 111 | 1.10 |
| Example 6 | 221 | 16,100 | 28 | 12 | 1.6 | 131 | 1.07 |
| Example 7 | 217 | 17,300 | 27 | 21 | 1.5 | 119 | 1.07 |
| Example 8 | 225 | 16,400 | 27 | 20 | 1.6 | 134 | 1.07 |
| Comparative Example3 | 204 | 15,400 | 24 | 10 | 3.0 | 112 | 1.02 |
| Comparative Example4 | 128 | 15,300 | 33 | 24 | 1.4 | 71 | 1.02 |
| Comparative Example5 | 194 | 13,000 | 26 | 11 | 2.5 | 110 | 1.01 |
| Comparative Example6 | 192 | 20,400 | 25 | 13 | 1.7 | 109 | 1.10 |
| Comparative Example7 | 126 | 16,400 | 22 | 29 | 0.9 | 69 | 1.05 |
| Comparative Example8 | 141 | 17,700 | 21 | 26 | 1.0 | 74 | 1.06 |

As clearly shown in Tables 1 to 4, in the case of Examples 1 to 8 in which the pellet mixtures according to the present embodiments were used, the resulting molded articles showed superior flexural strength.

In particular, in the case of Examples 7 to 8 where the pellets (Z) of the polypropylene resin (D) were contained, the Charpy notched impact strengths of the resulting molded articles were significantly improved.

In Comparative Example 1, Comparative Example 3, Comparative Example 5 and Comparative Example 6 where the pellets (X) contained an acid modified polypropylene resin, the results showed inferior flexural strength.

In Comparative Example 2, Comparative Example 4, Comparative Example 7 and Comparative Example 8 where the acid modified polypropylene resin (B) was not used, the results showed inferior flexural strength.

INDUSTRIAL APPLICABILITY

Use of the pellet mixture according to the present invention can provide a molded article having superior mechanical properties even in the case of a thin molded article and a large molded article. It can be widely used, for example, for parts and housings of electric/electronic devices such as personal computers, OA equipment, AV equipment and home electronics, or automobile parts. Further, since the balance between impregnation and interface strength is good, it is also effective in view of productivity.

**Claims**

1. A pellet mixture comprising pellets (X) containing a polypropylene resin (A) essentially unmodified with acid and carbon fibers (C); and pellets (Y) containing an acid modified polypropylene resin (B).

2. The pellet mixture according to claim 1, wherein the carbon fibers (C) are impregnated with the polypropylene resin (A).

3. The pellet mixture according to claim 1 or 2, wherein the mass average length (L) of the carbon fibers (C) in the pellets (X) is from 5 mm to 20 mm.

4. The pellet mixture according to claim 1 or 2, wherein the fiber diameter of the carbon fibers (C) in the pellets (X) is from 5 $\mu$m to 12 $\mu$m.

5. The pellet mixture according to claim 1 or 2, wherein the content of the carbon fibers (C) in the pellets (X) is from 10 mass % to 50 mass% relative to the total mass of the pellets (X).

6. The pellet mixture according to claim 1 or 2, wherein the amount of acid in the polypropylene resin (A) is 0.005 mass% or less in terms of maleic anhydride equivalence.

7. The pellet mixture according to claim 1 or 2, wherein the melt flow rate (MFR) of the polypropylene resin (A) (as measured at a temperature of 230°C and a load of 2.16 kg in accordance with JIS-K7210) is from 5 g/10 minutes to 70 g/10 minutes.

8. The pellet mixture according to claim 1 or 2, wherein the content of the polypropylene resin (A) in the pellet mixture is from 1 mass% to 94 mass% relative to the total mass of the pellet mixture.

9. The pellet mixture according to claim 1 or 2, wherein the acid modified polypropylene resin (B) is a polypropylene resin modified with unsaturated carboxylic acid or a derivative thereof.

10. The pellet mixture according to claim 1 or 2, wherein the amount of acid in the acid modified polypropylene resin (B) is from 0.5 mass% to 10 mass% in terms of maleic anhydride equivalence.

11. The pellet mixture according to claim 1 or 2, further comprising pellets (Z) of a polypropylene resin (D) having a melt flow rate (MFR) of from 0.1 g/10 minutes to 4 g/10 minutes (as measured at a temperature of 230°C and a load of 2.16 Kg in accordance with JIS-K7210).

12. A molded article obtained by molding the pellet mixture according to any one of claims 1 to 11.

13. The molded article according to claim 12, wherein the mass average length (L') of the carbon fibers (C) in the molded article is from 1 mm to 7 mm.

14. The molded article according to claim 12 or 13, wherein the amount of acid in the molded article is from 0.01 mass% to 0.5 mass% in terms of maleic anhydride equivalence.

15. A method of manufacturing a pellet mixture, comprising mixing carbon fibers (C) with a polypropylene resin (A) in a molten state to obtain pellets (X), and mixing the pellets (X) with pellets (Y) containing an acid modified polypropylene resin (B).

16. The method of manufacturing a pellet mixture according to claim 15, comprising melting the polypropylene resin (A) in an extruder; feeding a tow of the carbon fibers (C) to a die part of the extruder; performing drawing to mix the carbon fibers (C) with the polypropylene resin (A); then performing cutting with a side cut pelletizer to obtain the pellets (X);
and mixing the pellets (X) with the pellets (Y) containing the acid modified polypropylene resin (B).

17. A carbon fiber reinforced polypropylene resin composition, which is obtained by using pellets (X) containing a polypropylene resin (A) essentially unmodified with acid and carbon fibers (C); and pellets (Y) containing an acid modified polypropylene resin (B).

18. The carbon fiber reinforced polypropylene resin composition according to claim 17, which is obtained by melt kneading the pellets (X) and the pellets (Y).

19. The carbon fiber reinforced polypropylene resin composition according to claim 17 or 18, which is obtained by melt kneading the pellets (X), the pellets (Y) and further pellets (Z) of a polypropylene resin (D).

## INTERNATIONAL SEARCH REPORT

| International application No. |
|---|
| PCT/JP2013/082061 |

### A. CLASSIFICATION OF SUBJECT MATTER

*C08J3/12*(2006.01)i, *C08K7/06*(2006.01)i, *C08L23/10*(2006.01)i, *C08L23/26*(2006.01)i

According to International Patent Classification (IPC) or to both national classification and IPC

### B. FIELDS SEARCHED

Minimum documentation searched (classification system followed by classification symbols)
B29B7/00-11/14, 13/00-15/06, C08J3/00-3/28, C08K3/00-13/08, C08L1/00-101/14

Documentation searched other than minimum documentation to the extent that such documents are included in the fields searched
Jitsuyo Shinan Koho          1922-1996    Jitsuyo Shinan Toroku Koho    1996-2014
Kokai Jitsuyo Shinan Koho    1971-2014    Toroku Jitsuyo Shinan Koho    1994-2014

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 2011-178937 A  (Mitsubishi Rayon Co., Ltd.), 15 September 2011 (15.09.2011), entire text (Family: none) | 1-19 |
| A | WO 2010/038698 A1  (Mitsui Chemicals, Inc.), 08 April 2010 (08.04.2010), entire text & JP 2010-106263 A      & JP 2010-106262 A & US 2011/0178229 A1    & US 2013/0059966 A1 & EP 2345689 A1          & CN 102164989 A & KR 10-2011-0089265 A | 1-19 |
| A | WO 2012/132764 A1  (Toray Industries, Inc.), 04 October 2012 (04.10.2012), entire text & CN 103443193 A | 1-19 |

| ☒ | Further documents are listed in the continuation of Box C. | ☐ | See patent family annex. |

\* Special categories of cited documents:
"A"  document defining the general state of the art which is not considered    to be of particular relevance
"E"  earlier application or patent but published on or after the international filing date
"L"  document which may throw doubts on priority claim(s) or which is cited to establish the publication date of another citation or other special reason (as specified)
"O"  document referring to an oral disclosure, use, exhibition or other means
"P"  document published prior to the international filing date but later than the priority date claimed

"T"  later document published after the international filing date or priority date and not in conflict with the application but cited to understand the principle or theory underlying the invention
"X"  document of particular relevance; the claimed invention cannot be considered novel or cannot be considered to involve an inventive step when the document is taken alone
"Y"  document of particular relevance; the claimed invention cannot be considered to involve an inventive step when the document is combined with one or more other such documents, such combination being obvious to a person skilled in the art
"&"  document member of the same patent family

| Date of the actual completion of the international search | Date of mailing of the international search report |
|---|---|
| 14 January, 2014 (14.01.14) | 28 January, 2014 (28.01.14) |

| Name and mailing address of the ISA/ Japanese Patent Office | Authorized officer |
|---|---|
| Facsimile No. | Telephone No. |

Form PCT/ISA/210 (second sheet) (July 2009)

**INTERNATIONAL SEARCH REPORT**

International application No.

PCT/JP2013/082061

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2005-125581 A  (Daicel Chemical Industries, Ltd.), 19 May 2005 (19.05.2005), entire text (Family: none) | 1-19 |
| A | JP 2005-82786 A  (Idemitsu Kosan Co., Ltd.), 31 March 2005 (31.03.2005), entire text (Family: none) | 1-19 |

Form PCT/ISA/210 (continuation of second sheet) (July 2009)

**EP 2 927 265 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2012263409 A
- JP H03121146 B
- JP 2005125581 A

- JP 2004011030 A
- JP 2001214334 A
- JP H05261792 B